# EUROPEAN PATENT SPECIFICATION

(11) **EP 2 278 419 B1**
(45) Date of publication and mention of the grant of the patent: **04.03.2015**
(21) Application number: 10166597.4
(22) Date of filing: 21.06.2010
(51) Int. Cl.: G05B 15/02, H05B 37/02, H05B 41/392

(54) **Motion detector and load control unit**
Bewegungsdetektor und Laststeuereinheit
Détecteur de mouvement et unité de contrôle de charge

(30) Priority: 07.07.2009 FI 20095768
(43) Date of publication of application: 26.01.2011
(73) Proprietor: Ensto Finland Oy, 06100 Porvoo (FI)
(72) Inventor: Kotro, Jorma, 06400 Porvoo (FI); Metsikkö, Martti, 04630 Sääkskylä (FI); Backman, Claus, 00530 Helsinki (FI)
(74) Representative: Kolster Oy Ab

(56) References cited:
- WO-A1-96/41502
- WO-A1-03/098977
- US-A1- 2009 085 494
- US-B1- 6 188 177
- US-B1- 7 215 088

## Description

### FIELD OF THE INVENTION

The invention relates to a motion detector, by means of which it is possible to control lighting on the basis of the lightness of a space and the presence of people detected in the space.

### DESCRIPTION OF PRIOR ART

Previously there is known a motion detector having a light sensor for monitoring the lightness of a space. As long as the lightness of the space is low, i.e. it is below a predetermined limit, the motion detector generates a signal for an attachment device, the signal indicating that the space should be illuminated with a light source.

The above-mentioned known motion detector also comprises a motion sensor detecting a human being present in the space. If the presence of a human being is detected when the lightness is low in the space, the motion detector indicates to the attachment device that illumination of high intensity should be produced by a light source. Whereas, if no presence of a human being is detected when the lightness is low, the motion detector indicates to the attachment device that illumination of low intensity should be produced by a light source.

A drawback with this known solution is adjustment of light intensity produced by the light source. The control provided by a motion detector for an attachment device of the light source is, in practice, of a relay type, i.e. the motion detector is only capable of indicating when the lighting should be off, when the lighting should have high intensity and when the lighting should have low intensity. In practice, spaces to be lit differ greatly from one another, and consequently the user needs a simple manner to change the intensity of lighting such that the illuminance desired by the user will be easily achieved in the space.

Previously there is also known from WO 96/41502 a movable desktop load controller. With this controller the user can press buttons in order to increase or decrease lightning. The controller transmits signals via a wireless interface to a load control unit controlling a light source. Previously there is also known from US 2009/0085494 a lightning system including a dimmer controller controlling a level of illumination by varying on-duration of a phase controlled output power signal, preferably a chopped A.C. mains power signal. However, these references fail to disclose a sufficiently simple and cheap solution for controlling the level of illumination. Document WO03098977 discloses an arrangement to save energy when fighting stretches of private roads, footpaths, cycle tracks, ski tracks, running tracks or the like. When it is dark and when the movement detector detects persons or vehicles within its detection area, the electronic unit sends a signal to the lampposts in front and behind.

### SUMMARY OF THE INVENTION

The object of the present invention is to solve the above-described problem and to provide a solution that enables a simple and fast manner to change intensity of illumination according to the user's wishes. This is achieved with a motion detector in accordance with the attached independent claim 1.

The invention utilizes the possibility of arranging in the attachment device a control output that indicates to the attachment device the level of illumination a light source should provide at any particular time. By utilizing a user interface of the motion detector the user may then set the lighting level to be of high intensity or low intensity, as desired, in a simple and easy manner, for instance at the same time, when the user sets the other parameter values affecting the operation of the motion detector.

Preferred embodiments of the motion detector are disclosed in the attached dependent claims.

### BRIEF DESCRIPTION OF THE DRAWINGS

In the following the invention will be described in greater detail, by way of example, with reference to the attached drawings, in which
Figure 1 illustrates connections between a motion detector and an attachment device,
Figure 2 is a block diagram of the motion detector and the attachment device,
Figure 3 illustrates cooperation of a plurality of motion detectors,
Figure 4 illustrates light level adjustment of illumination of high intensity,
Figure 5 illustrates light level adjustment of illumination of low intensity,
Figure 6 illustrates switching off of illumination and
Figure 7 illustrates a dimming period.

### DESCRIPTION OF AT LEAST ONE EMBODIMENT

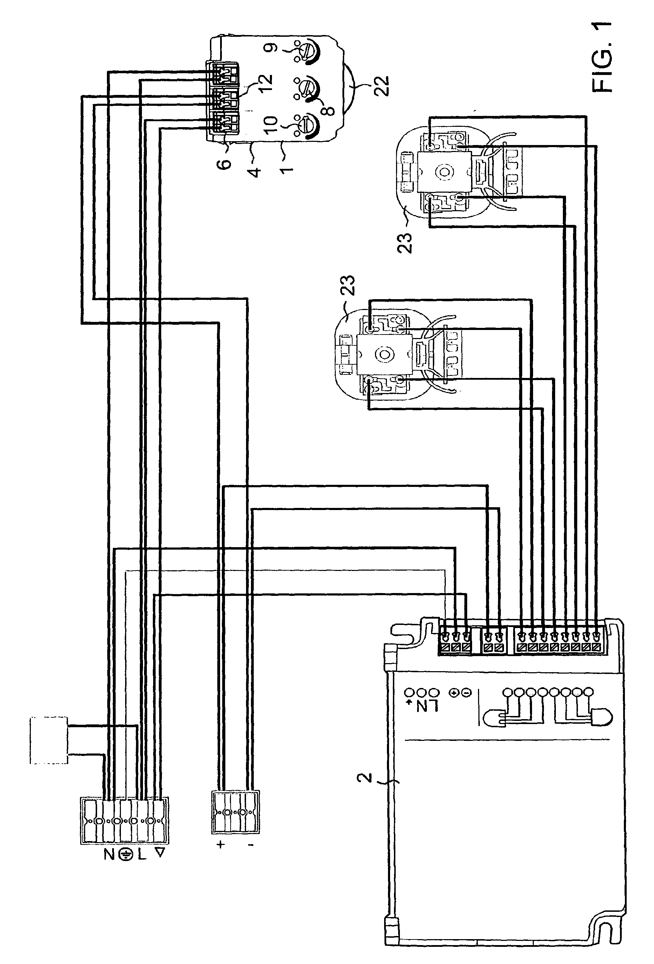

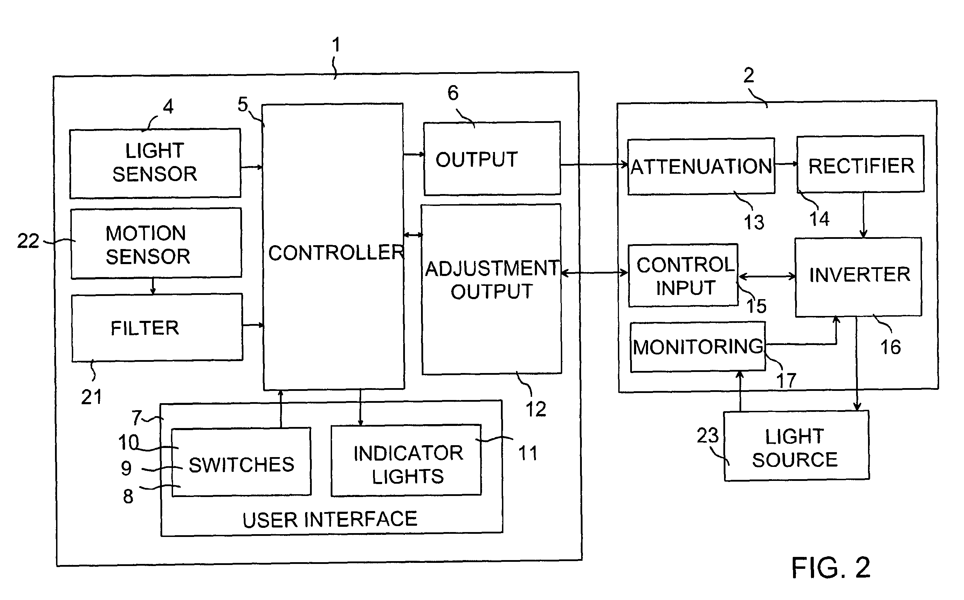

Figure 1 illustrates connections between a motion detector 1 and an attachment device 2 and Figure 2 is a block diagram of the motion detector 1 and the attachment device 2. In this example it is assumed that two light sources 23 are controlled by one motion detector 1 and attachment device 2. In practice, one motion detector may control one or more light sources. The light sources 23 may be luminaires including fluorescent lamps or photodiodes, for instance.

The motion detector 1 includes a light sensor 4 for monitoring lightness in a space. The sensor may be an LDR (Light Dependent Resistor), a photodiode, a phototransistor, a photoIC or the like, by means of which it is possible to produce information for a controller 5 about the light level prevailing in a space at any particular time. The controller 5, which in practice may be implemented by circuitry or a combination of circuitry and software, for instance, by a processor that executes a computer program stored in a memory, controls light sources 23 on and off on the basis of information received from the light sensor 4 describing the lightness in the space. The control of light sources is implemented as will be described later on in the text.

The motion detector 1 also includes a motion sensor 22, which produces through a filter (e.g. low- or high-pass filter) information for the controller 5 on whether a person is detected in the space. In practice, the motion sensor 22 may consist, for instance, of an infrared sensor, a PIR (Passive InfraRed) sensor, a microwave transmitter and receiver or an ultrasound transmitter and receiver.

The motion detector 1 comprises an output 6, which is of relay-type and through which the motion detector may control the supply voltage of an attachment device so as to switch off a light source 23. At least when information is transmitted to the controller 5 through the light sensor 4 that light level in the space exceeds a given limit value, the controller of the motion detector 1 controls the attachment device through the output 6 to switch off the light source 23. The above-mentioned limit value of light level may be determined by the user through a switch 8, e.g. a potentiometer, in the user interface 7 of the attachment device 1. The user interface of the attachment device further includes a switch 9, e.g. a potentiometer, by which the user may set the sensitivity of the motion sensor 22. The user interface 7 further includes a switch 10, e.g. a potentiometer, by which the user may set the length of delay time t for producing illumination of high intensity after the motion sensor has last detected a person in the detection area. This time having expired, the controller 5 controls the illumination produced by the light source 23 to low intensity. The user interface 7 also includes indicator lights 11, e.g. a red and a green light diode, which indicate each particular state of the motion detector to the user.

Through the user interface 7 the user may also set a desired high illumination level MAX and a desired low illumination level MIN. These levels may be set with the same user interface switches 8 to 10 as those also utilized, as described above, for other purposes. The level of high illumination level may be adjusted, for instance, by turning the switch 9 to the minimum position for 3 seconds (the time may vary depending on the implementation), whereby the controller detects that the user wishes to set the high illumination level and indicates this to the user by switching on a red light diode. Thereafter, the user may turn the switch 9 to a position that corresponds to the desired high illumination level MAX. In a corresponding manner, with another switch (or cooperation of several switches) it is possible to set a low illumination level MIN, unless a dedicated, separate switch is to be arranged in the user interface 7 of the motion detector 1 for each value to be set.

The motion detector 1 includes an adjustment output 12, by which the motion detector 1 indicates to the attachment device 2 the illumination level to be used at any particular time. For instance, this may concern an analog signal whose voltage (e.g. 1 to 10 V) is responsive to the illumination level the light source 23 should produce at a particular time. In that case, when the controller:

- finds, on the basis of the light sensor 4, that light level in a space is below a limit value and that the motion sensor 22 has detected a person in the space, the controller controls the adjustment output 12 to a voltage level that corresponds to the high illumination level MAX the user has set by the user interface 7,

- finds, on the basis of the light sensor 4, that light level in a space is below a limit value and that more time has passed since the motion sensor 22 last detected a person in the space than the delay time set by the user by the user interface, the controller controls the adjustment output 12 to a voltage level that corresponds to the low illumination level MIN the user has set by the user interface 7, and

- finds, on the basis of the light sensor 4, that light level in a space is above a limit value, the controller 5 controls the attachment device by means of the output 6 to switch off the light source 23.

The supply voltage of the attachment device 2 is implemented through a motion detector output 6, an interference attenuator 13 and a rectifier 14. On the basis of a control signal to be received through a control input 15 an inverter 16 electrifies the light source 23. In case the control signal is an analog signal whose voltage is responsive to the illumination level, the inverter 16 controls the light source to produce light intensity the magnitude of which is proportional to the control signal voltage (e.g. 1 to 10 V). Thus, no user interface is needed in the attachment device for adjusting the light intensity of the light source 23, but the required adjustment may be implemented by utilizing the user interface 7 of the motion detector. In order to monitor the operation of the light source the attachment device may comprise a monitoring block 17 that monitors the switching on and off of the light source 23, the operation of the light source as well as its temperature.

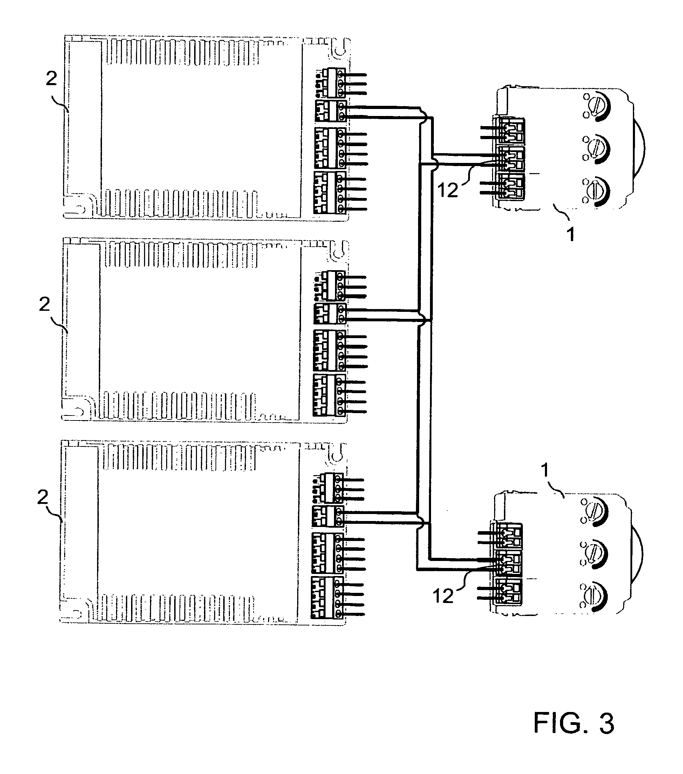

Figure 3 illustrates cooperation of a plurality of motion detectors. This cooperation is not necessary in all embodiments, but it is preferred in that in a large space it allows control of light sources 23 by means of a plurality of motion detectors arranged in various parts of the space.

In the embodiment of Figure 3 it is assumed, by way of example, that motion detectors 1 and attachment devices 2 similar to those described in connection with Figures 1 and 2 are concerned.

It appears from Figure 3 that adjustment outputs 12 of the attachment devices 2 are interconnected. For the sake of simplicity, other connections or light sources are not shown in Figure 3. In this embodiment the motion detectors 1 have been arranged to produce and forward a predetermined switch-on signal, when the motion detectors 1 transfer to indicate high illumination level to the attachment devices 2. This may concern a switch-on signal to be produced by means of short pulses, in which the voltage of a control signal fed from the adjustment output varies according to a predetermined pattern in order for other motion detectors to detect that one of the motion detectors 1 has transferred to a state, in which it indicates high illumination level MAX to the attachment device or devices 2. In that case the motion detectors 1 are arranged to react to the detection of the switch-on signal by moving over to a state, in which they indicate high illumination level. Implemented in this manner, the presence of a person in a space detected by one motion detector results in this information being transmitted to all motion detectors at the same time and they all transfer (almost) simultaneously to a state, in which they indicate high illumination level MAX.

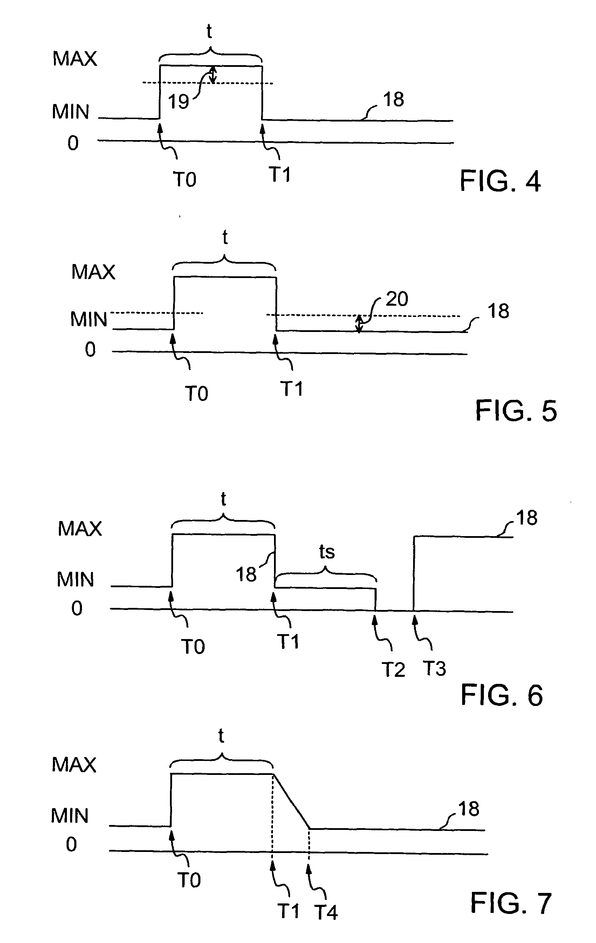

Figure 4 illustrates adjustment of light level of illumination of high intensity when the lightness in the space is below the limit value set by the user, i.e. in the dark.

At a time instant T0 the motion detector detects the presence of a person in the space, whereby its controller 5 controls the light intensity 18 to be produced by the light source 23 to the high illumination level MAX set by the user. The adjustment range in which this high illumination level MAX set by the user may vary is illustrated by arrow 19.

The intensity of illumination 18 remains at the high illumination level MAX until the period of time t set by the user through the user interface 7 has passed after the time sensor 22 last detected a person in the space. Said time having expired at time instant T1, the intensity of illumination fades down to a low illumination level MIN set by the user through the user interface 7 of the motion detector 1, at which level it will remain until the motion detector next time detects a person in the space, or until the light level of illumination has risen above the limit value set by the user (night turned to day).

Figure 5 illustrates adjustment of light level of low ilumination when the lightness in the space is below the limit value set by the user. Figure 5 differs from Figure 4 only in that in Figure 5 the arrow 20 illustrates the range within which the low illumination level MIN set by the user may vary. The user may set the low illumination level MIN through the user interface of the motion detector in the same way as described in connection with setting the high illumination level.

Figure 6 illustrates how the lighting is switched off. In the examples of Figures 4 and 5 it was assumed that as long as the controller 5 of the motion detector 1 receives information through the light sensor 4 that the light level in the space is below the limit value (dark), the motion detector 1 controls the attachment device to maintain the light source switched on, depending on the circumstances, at the low illumination level MIN or at the high illumination level MAX. Unlike therein, in the embodiment of Figure 6 the motion detector 1 controls the attachment device to switch off the light source 23 completely.

In the embodiment of Figure 6 the light source is switched off when the low illumination level MIN has been in use for a time period that corresponds to the switching-off period ts set by the user through the user interface 7 of the motion detector. In Figure 6 the low-intensity lighting level MIN is put to use at time instant T1, and at time instant T2 time has passed for an amount of the switching-off period ts from the transfer to the low illumination level. Because the motion detector has not detected a person in the space, the motion detector controls the attachment device 2 at that time instant T2 to switch off the light source 23, even though the lightness in the space is below the limit value (i.e. it is dark in the space).

The light source 23 being switched off at time instant T3, when it is still dark in the space, the motion sensor 3 of the motion detector detects a person in the space. In that case the controller 5 of the motion detector controls the attachment device such that the light source 23 is switched on at high illumination level MAX.

Figure 7 illustrates a dimming period. The dimming period illustrated in Figure 7 may be utilized in connection with any of the above embodiments, when there is a need to move over from the high illumination level MAX to the low illumination level MIN.

In connection with the above embodiments it is assumed that a transfer from the high illumination level MAX to the low illumination level MIN takes place immediately at a given time instant. In the case of Figure 7, however, there is employed a dimming period that starts at time instant T1, from which on the light level 18 gradually changes such that the low illumination level is achieved at time instant T4. The length of the dimming period may be set in the motion detector during manufacture, or alternatively, the user may determine the length of the dimming period through the user interface 7. In both cases the controller 5, through the adjustment output 12, attends to it that the attachment device receives the control signal by which the set dimming period is implemented in the light source.

It is to be understood that the above description and the relating figures are only intended to illustrate the present invention. It will be obvious to persons skilled in the art that the invention may be modified and altered in a variety of ways without deviating from the scope of the claims.

## Claims

1. A motion detector (1) for controlling an attachment device (2) of a light source (23), the motion detector comprising:
a light sensor (4) adapted to monitor light level in a space,
a motion sensor (22) adapted to detect a person in the space,
a controller (5) which is responsive to the light sensor (4) and the motion sensor (22) and which is adapted to produce for the attachment device (2) a signal that indicates when the light source (23) should produce high illumination (MAX) level, low illumination (MIN) level and when the illumination should be switched off, a user interface (7) through which the user may set at least the desired high illumination level (MAX) and low illumination level (MIN), and
an adjustment output (12) which in response to the controller (5) and to said levels (MAX, MIN) set by the user through the user interface (7) is adapted to indicate to the attachment device (2) the illumination level (18) the light source (23) should produce at any particular time, **characterized in that**
said adjustment output (12) is adapted to indicate to the attachment device (2) the illumination level (18) by an analog signal whose voltage is responsive to the illumination level (18) the light source (23) should produce at any particular time, and
the motion detector (1) is adapted to cooperate with other motion detectors and is arranged to react to the detection of a switch-on signal transmitted from another motion detector so as to control the adjustment output (12) to indicate high illumination level (MAX) to the attachment device.

2. The motion detector of claim 1, wherein
the user interface (7) of the motion detector (1) is arranged to receive from the user a switching-off period (ts) set by the user and
the motion detector (1) is arranged to transmit a switch-off signal to the attachment device (2) so as to switch off the light source (23) when the illumination level (18) has been of low intensity (MIN) for a period of time that corresponds to the switching-off period (ts) set by the user.

3. The motion detector of any one of claims 1 to 3, wherein
the user interface (7) of the motion detector (1) is arranged to receive from the user a dimming period set by the user and
for adjusting the light source (23) to produce low illumination; the motion detector (1) being further arranged to reduce the illumination level indicated by the adjustment output (12) to the attachment device (2) from the high illumination level (MAX) set by the user to the low illumination level (MIN) set by the user gradually in the course of the time period (T1 to T4) corresponding to the dimming period.

4. The motion detector of any one of claims 1 to 3, wherein said motion sensor (22) comprises an infrared sensor, a microwave receiver or an ultrasound receiver.

## Patentansprüche

1. Bewegungsdetektor (1) zum Steuern einer Anbringungsvorrichtung (2) einer Lichtquelle (23), wobei der Bewegungsdetektor aufweist:
einen Lichtsensor (4), der zum Überwachen des Lichtpegels in einem Raum in der Lage ist,
einen Bewegungssensor (22), der zum Detektieren einer Person in dem Raum in der Lage ist,
eine Steuervorrichtung (5), die auf den Lichtsensor (4) und den Bewegungssensor (22) reagiert und in der Lage ist, ein Signal für die Anbringungsvorrichtung (2) zu erzeugen, das angibt, wann die Lichtquelle (23) eine starke Beleuchtung (MAX-Pegel) oder eine schwache Beleuchtung (MIN-Pegel) erzeugen soll und wann die Beleuchtung ausgeschaltet werden soll,
eine Benutzerschnittstelle (7), über die der Benutzer mindestens den gewünschten starken Beleuchtungspegel (MAX) und den gewünschten schwachen Beleuchtungspegel (MIN) einstellen kann, und
eine Einstellungs-Ausgabevorrichtung (12), die in der Lage ist, der Anbringungsvorrichtung (2) als Reaktion auf die Steuervorrichtung (5) und die von dem Benutzer über die Benutzerschnittstelle (7) eingestellten Pegel (MAX, MIN) den Beleuchtungspegel (18) mitzuteilen, den die Lichtquelle (23) zu irgendeiner bestimmten Zeit erzeugen soll, **dadurch gekennzeichnet, dass**
die Einstellungs-Ausgabevorrichtung (12) in der Lage ist, der Anbringungsvorrichtung (2) den Beleuchtungspegel (18) mittels eines Analogsignals mitzuteilen, dessen Spannung auf den Beleuchtungspegel (18) reagiert, den die Lichtquelle (23) zu irgendeiner bestimmten Zeit erzeugen soll,
der Bewegungsdetektor (1) in der Lage ist, mit anderen Bewegungsdetektoren zu kooperieren, und derart ausgelegt ist, dass er auf die Detektion eines von einem anderen Bewegungsdetektor übermittelten Einschaltsignals reagiert, um die Einstellungs-Ausgabevorrichtung (12) dahingehend zu steuern, dass diese der Anbringungsvorrichtung den starken Beleuchtungspegel (MAX) mitteilt.

2. Bewegungsdetektor nach Anspruch 1, bei dem
die Benutzerschnittstelle (7) des Bewegungsdetektors (1) derart ausgelegt ist, dass es von dem Benutzer eine seitens des Benutzers eingestellte Ausschaltperiode (ts) empfängt, und
der Bewegungsdetektor (1) derart ausgelegt ist, dass er an die Anbringungsvorrichtung (2) ein Ausschaltsignal zum Ausschalten der Lichtquelle (23) übermittelt, wenn sich der Beleuchtungspegel (18) während einer Zeitperiode, die der vom Benutzer eingestellten Ausschaltperiode (ts) entspricht, auf niedriger Intensität (MIN) befunden hat.

3. Bewegungsdetektor nach einem der Ansprüche 1 bis 3, bei dem
die Benutzerschnittstelle (7) des Bewegungsdetektors (1) derart ausgelegt ist, dass es von dem Benutzer eine seitens des Benutzers gesetzte Dimm-Periode erhält, und
der Bewegungsdetektor (1), um die Lichtquelle (23) auf das Erzeugen schwacher Beleuchtung einzustellen, ferner derart ausgelegt ist, dass er im Verlauf der Zeitperiode (T1 bis T4), die der Dimm-Periode entspricht, den der Anbringungsvorrichtung (2) von der Einstellungs-Ausgabevorrichtung (12) angegebenen Beleuchtungspegel graduell von dem seitens des Benutzers gesetzten starken Beleuchtungspegel (MAX) auf den seitens des Benutzers gesetzten schwachen Beleuchtungspegel (MIN) reduziert.

4. Bewegungsdetektor nach einem der Ansprüche 1 bis 3 bei dem der Bewegungssensor (22) einen Infrarotsensor, einen Mikrowellenempfänger oder einen Ultraschallempfänger aufweist.

## Revendications

1. Détecteur de mouvement (1) pour commander un dispositif accessoire (2) d'une source de lumière (23), le détecteur de mouvement comprenant :
un capteur de lumière (4) conçu pour surveiller un niveau de lumière dans un espace,
un capteur de mouvement (22) conçu pour détecter une personne dans l'espace,
un contrôleur (5) qui réagit au capteur de lumière (4) et au capteur de mouvement (22) et qui est conçu pour produire, pour le dispositif accessoire (2), un signal qui indique le moment auquel la source de lumière (23) devrait produire un éclairage élevé (niveau MAX), un éclairage faible (niveau MIN), et le moment auquel l'éclairage devrait être désactivé,
une interface utilisateur (7) par l'intermédiaire de laquelle l'utilisateur peut déterminer au moins le niveau d'éclairage élevé (MAX) et le niveau d'éclairage faible (MIN) souhaités, et
une sortie d'ajustement (12) qui, en réponse au contrôleur (5) et aux dits niveaux (MAX, MIN) déterminés par l'utilisateur par l'intermédiaire de l'interface utilisateur (7), est conçue pour indiquer au dispositif accessoire (2) le niveau d'éclairage (18) que la source de lumière (23) devrait produire à un instant particulier, **caractérisé en ce que**
ladite sortie d'ajustement (12) est conçue pour indiquer au dispositif accessoire (2) le niveau d'éclairage (18) par un signal analogique dont la tension est fonction du niveau d'éclairage (18) que la source de lumière (23) devrait produire à un instant particulier, et
le détecteur de mouvement (1) est conçu pour coopérer avec d'autres détecteurs de mouvement et est agencé pour réagir à la détection d'un signal d'activation transmis par un autre détecteur de mouvement de manière à commander la sortie d'ajustement (12) pour qu'elle indique un niveau d'éclairage élevé (MAX) au dispositif accessoire.

2. Détecteur de mouvement selon la revendication 1, dans lequel
l'interface utilisateur (7) du détecteur de mouvement (1) est agencée pour recevoir de l'utilisateur une période de désactivation (ts) déterminée par l'utilisateur, et
le détecteur de mouvement (1) est agencé pour transmettre un signal de désactivation au dispositif accessoire (2) de manière à désactiver la source de lumière (23) lorsque le niveau d'éclairage (18) a été à une faible intensité (MIN) pendant une période de temps qui correspond à la période de désactivation (ts) déterminée par l'utilisateur.

3. Détecteur de mouvement selon l'une quelconque des revendications 1 à 3, dans lequel
l'interface utilisateur (7) du détecteur de mouvement (1) est agencée pour recevoir de l'utilisateur une période de gradation déterminée par l'utilisateur, et
pour ajuster la source de lumière (23) pour produire un faible éclairage ;
le détecteur de mouvement (1) étant en outre agencé pour réduire le niveau d'éclairage indiqué par la sortie d'ajustement (12) au dispositif accessoire (2) du niveau d'éclairage élevé (MAX) déterminé par l'utilisateur au niveau d'éclairage faible (MIN) déterminé par l'utilisateur graduellement au cours de la période de temps (T1 à T4) correspondant à la période de gradation.

4. Détecteur de mouvement selon l'une quelconque des revendications 1 à 3, dans lequel ledit capteur de mouvement (22) comprend un capteur infrarouge, un récepteur hyperfréquence ou un récepteur ultrasonore.
